# EUROPEAN PATENT SPECIFICATION

(11) **EP 4 546 810 B1**
(45) Date of publication and mention of the grant of the patent: **05.11.2025**
(21) Application number: 23205096.3
(22) Date of filing: 23.10.2023
(51) Int. Cl.: H04N 23/81, H04N 23/71, G06T 5/77

(54) **METHOD AND SYSTEM OF ADAPTABLY DETECTING DIRT, OCCLUSION AND SMUDGE ON CAMERA LENS AND IMAGE SENSOR**
VERFAHREN UND SYSTEM ZUR ANPASSBAREN ERKENNUNG VON SCHMUTZ, OKKLUSION UND SCHMUTZ AUF EINER KAMERALINSE UND BILDSENSOR
PROCÉDÉ ET SYSTÈME DE DÉTECTION ADAPTATIVE DE SALETÉ, D'OCCLUSION ET DE TRACES SUR UN OBJECTIF DE CAMÉRA ET CAPTEUR D'IMAGE

(43) Date of publication of application: 30.04.2025
(73) Proprietor: Climax Technology Co., Ltd., Taipei 114 (TW)
(72) Inventor: CHEN, Yi-Kai, 10850 Taipei City (TW); HUANG, Chun-Chi, 114033 Taipei City (TW); CHANG, Wen-Yi, 403008 Taichung City (TW)
(74) Representative: Karakatsanis, Georgios

(56) References cited:
- CN-A- 111 246 204
- CN-B- 107 194 886
- US-A1- 2020 244 950
- US-A1- 2021 090 237
- US-A1- 2021 090 262

## Description

### BACKGROUND OF THE INVENTION

### 1. FIELD OF THE INVENTION

The present invention generally relates to a camera module, and more particularly to a method and system of adaptably detecting dirt, occlusion and smudge on camera lens and image sensor.

### 2. DESCRIPTION OF RELATED ART

A camera module, such as passive infrared (PIR) camera or internet protocol (IP) camera, is a device that captures images using one or more lenses and an image sensor. The quality of the captured images may be affected by various factors, such as the properties or aging of the camera, the presence of dirt, occlusion, smudge or the lighting conditions. For example, some camera modules may exhibit vignetting in a corner of the image, or may exhibit blocking on a side or in a center area of the image. These issues may impair the performance and functionality of the camera modules.

A common method for identifying dirt, occlusion and smudge on camera lens and image sensor is to use edge detection, which is based on the changes in brightness levels. However, this approach has some limitations, as it can be influenced by the variations in the ambient conditions and the illumination source, leading to errors in the detection process. US 2021/090237 A1 discloses a deposit detection device, in which a calculation module calculates a brightness average for each of small regions into which a predetermined region of an image captured by an imaging device is divided; an extraction module extracts, as a high-brightness region, the small region in which the brightness average calculated by the calculation module is equal to or larger than a predetermined value; and a decision module decides on a brightness threshold value for detecting a deposit region corresponding to a deposit adhering to the imaging device, based on the area of the high-brightness region extracted by the extraction module. CN 111246204 A discloses a dirt detection method and device based on relative brightness deviation. The method comprises the following steps: obtaining a to-be-detected image photographed by a to-be-detected camera module; dividing the image to be detected into a plurality of image blocks, and obtaining a brightness value of each image block; performing region division on the to-be-detected image, and determining a target area to which each image block belongs; obtaining the relative brightness deviation of each image block in the target area according to the brightness value; and comparing the relative brightness deviation with a target threshold corresponding to the target area, and judging whether each image block is a dirty block or not according to a comparison result. CN 107194886 B discloses a dust detection method and device used for a camera sensor. The method comprises the following steps: a camera to be detected photographs a white plane to obtain a test image; filtering processing is carried out on the test image to obtain a filtered image, and a difference value image is obtained according to the test image and the filtered image; and according to the difference value image, a threshold value is calculated, and threshold value processing is carried out on the difference value image to realize dust detection.

A need has thus arisen to propose a novel scheme to overcome the drawbacks of traditional methods of detecting dirt, occlusion and smudge on camera lens and image sensor.

### SUMMARY OF THE INVENTION

In view of the foregoing, it is an object of the embodiment of the present invention to provide a method and system of adaptably detecting dirt, occlusion and smudge on camera lens and image sensor without being affected by the variations in the ambient conditions and the illumination source.

According to one embodiment, a method of adaptably detecting dirt, occlusion and smudge on camera lens and image sensor includes the following steps. An image is captured, and original pixels of the image are subject to sampling to result in sampled pixels. Outliers of the sampled pixels are excluded to result in retained pixels. An average value of the retained pixels is obtained, and a tolerance value is obtained according to luminance values of the retained pixels. A threshold value for determining dirt, occlusion and smudge on camera lens and image sensor in the image is generated according to the tolerance value and the average value of the retained pixels. A luminance value of at least one pixel of the image is compared with a corresponding threshold value.

### BRIEF DESCRIPTION OF THE DRAWINGS

FIG. 1 shows a block diagram illustrating a system of adaptably detecting dirt, occlusion and smudge on camera lens and image sensor;
FIG. 2 shows a flow diagram illustrating a method of adaptably detecting dirt, occlusion and smudge on camera lens and image sensor according to one embodiment of the present invention adaptable to the system of FIG. 1;
FIG. 3 shows a schematic diagram illustrating (uniform) sampled pixels of the image according to one embodiment of the present invention;
FIG. 4A shows a schematic diagram illustrating four corners of the image;
FIG. 4B shows a schematic diagram illustrating four sides of the image; and
FIG. 4C shows a schematic diagram illustrating a center area of the image.

### DETAILED DESCRIPTION OF THE INVENTION

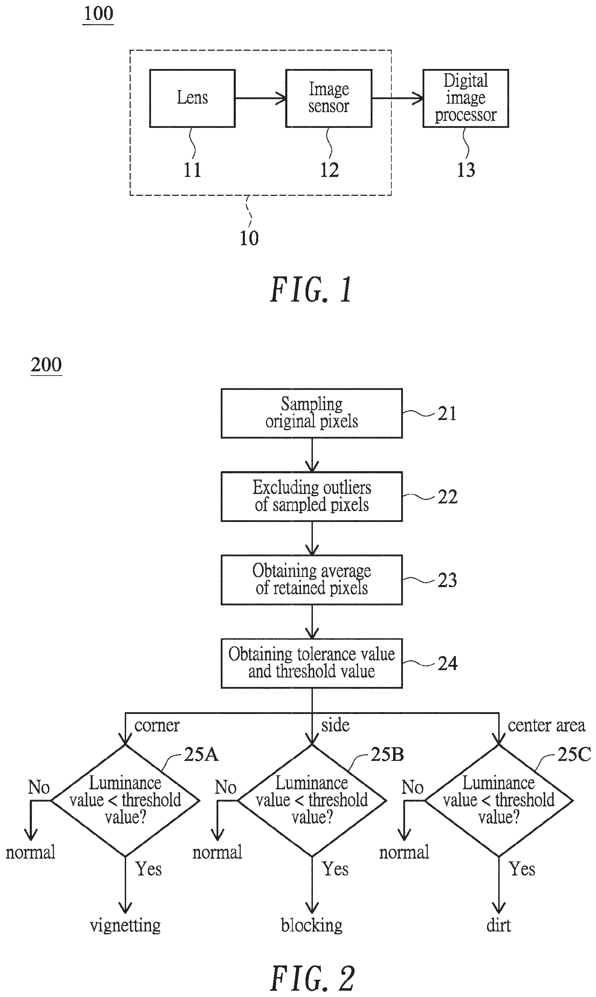

FIG. 1 shows a block diagram illustrating a system100 of adaptably detecting dirt, occlusion and smudge on camera lens and image sensor, and FIG. 2 shows a flow diagram illustrating a method 200 of adaptably detecting dirt, occlusion and smudge on camera lens and image sensor according to one embodiment of the present invention adaptable to the system 100 of FIG. 1.

As shown in FIG. 1, the system 100 of adaptably detecting dirt, occlusion and smudge on camera lens and image sensor ("system" hereinafter) may include a camera module 10 that is composed of at least one (camera) lens 11 and an image sensor 12 that is coupled to receive light focused by the lens 11 and is configured to generate (or capture) an image accordingly. In the embodiment, the captured image is a monochrome image composed of pixels of one color. The monochrome image is a type of digital image that represents the intensity of light in a range of shades of gray or another color.

The system 100 may include a digital image processor 13 that is coupled to receive the (captured) image and is configured to detect dirt, occlusion and smudge on the camera lens 11 and the image sensor 12, for example, vignetting (in a corner), blocking (on a side) or dirt (in a center area) according to the image. After the detection is complete, the digital image processor 13 may then optionally apply appropriate techniques such as correction or enhancement to improve the quality of the image. For example, the digital image processor 13 may operatively remove unwanted artifacts, adjust brightness and saturation, sharpen details, and apply filters or effects.

As shown in FIG. 2, in step 21, original pixels of the (captured) image are subject to sampling to result in sampled pixels, with a number being less than a number of the original pixels, thereby reducing the amount of data in the image by selecting a subset of pixels to represent the whole image. Sampling may be done in different ways, such as uniform sampling, non-uniform sampling or adaptive sampling. Uniform sampling means that the original pixels are mapped to the sampled pixels in a regular and consistent pattern, such as a grid or a lattice. Non-uniform sampling means that the original pixels are mapped to the sampled pixels in an irregular and inconsistent pattern, such as a random or a jittered pattern. Adaptive sampling means that the original pixels are mapped to the sampled pixels in a variable and dynamic pattern, depending on the characteristics and features of the image, such as edges or textures.

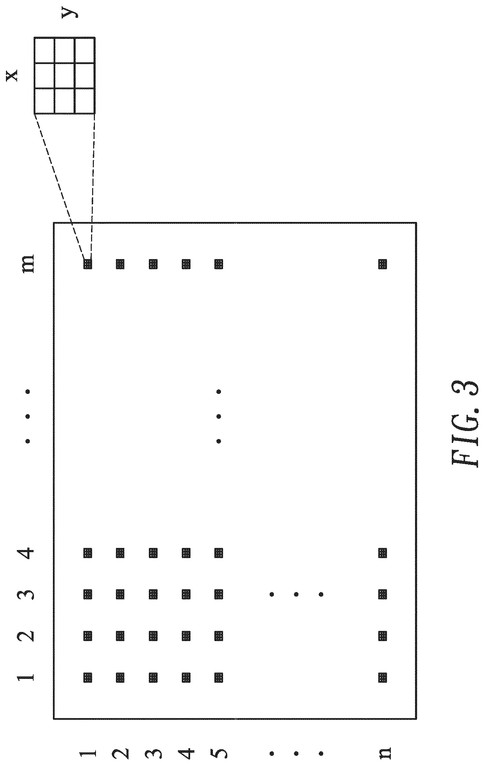

FIG. 3 shows a schematic diagram illustrating (uniform) sampled pixels of the image according to one embodiment of the present invention. Specifically, the original pixels within a rectangle of the image are sampled to result in mxn sampled pixels, where m represents a number of sampled pixels in horizontal direction and n represents a number of sampled pixels in vertical direction. Each sampled pixel may, for example, correspond to original pixels of a pixel matrix (e.g., 3x3 pixel matrix), and a luminance (or brightness) value of each sampled pixel is an average value of luminance values of the corresponding original pixels of the pixel matrix. In the specification, the term "average value" may be used to describe a single value that suitably represents a set of data. For example, a common type of average is the arithmetic mean, which is calculated by summing up all the numbers in a list and dividing the sum by the number of elements in the list. There are other types of averages that may be used to represent data, such as the median (the middle value in a sorted list), the mode (the most frequently occurring value) and the mid-range (the average of the highest and lowest values in a list). Although sampling within a rectangle is illustrated in the embodiment, it is appreciated that other schemes may be adopted. For example. in other embodiments, original pixels within a rhombus (or diamond) or along a cross of the image may be subject to sampling to result in sampled pixels.

In step 22, outliers of the sampled pixels are excluded to make results of subsequent steps more accurate. Outliers are the pixels that have values that are significantly different from the majority of the pixels in the sampled pixels. They can be caused by noise, errors or anomalies in the data. Excluding outliers can reduce the variability and bias in the data, and make it easier to apply statistical methods and algorithms for further processing.

Specifically, in the embodiment, the sampled pixels are firstly sorted from smallest to largest according to luminance values, thereby resulting in sorted (sampled) pixels. Subsequently, a predetermined (first) percentage (e.g., 10%) of the sorted pixels with smallest luminance values are removed from the sorted pixels, and a predetermined (second) percentage (e.g., 10%) of the sorted pixels with largest luminance values are removed from the sorted pixels, thereby obtaining retained pixels (e.g., with a percentage relative to the sorted pixels being 80%) with luminance values between the smallest luminance values and the largest luminance values.

In step 23, an average value of the retained pixels is obtained to represent demarcation between normal luminance and abnormal luminance. As mentioned above, in the specification, the term "average value" may, but not exclusively, be referred to arithmetic mean, median, mode or mid-range.

Next, in step 24, a tolerance value is obtained according to luminance values of the retained pixels. Specifically, in the embodiment, the tolerance value is equal to a difference between a maximum luminance value and a minimum luminance value of the retained pixels. A threshold value for determining dirt, occlusion and smudge on the camera lens 11 and the image sensor 12 in a center area of the image may be generated by subtracting the tolerance value from the average value of the retained pixels. It is noted that a threshold value for determining dirt, occlusion and smudge on the camera lens 11 and the image sensor 12 in an area (e.g., corner or side) other than the center area of the image may be generated by subtracting multiple (not necessarily an integer multiple) of the tolerance value from the average value of the retained pixels. In other words, in the embodiment, the threshold value for the center area is higher than the threshold value for the corner or the side.

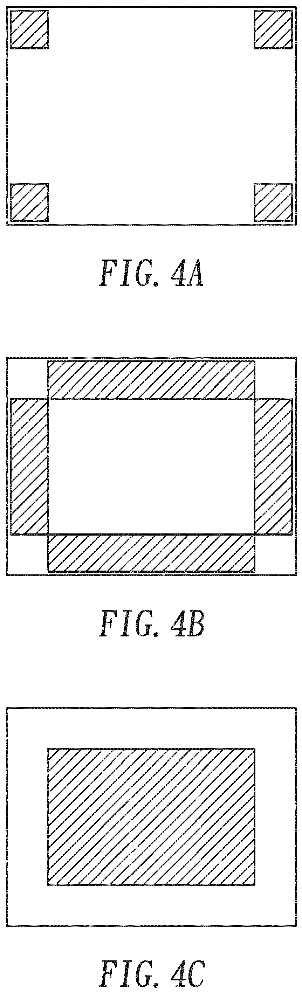

FIG. 4A shows a schematic diagram illustrating four corners of the image. Specifically, a corner is defined as an area within a predetermined percentage (e.g., 10%) of both horizontal boundary and vertical boundary (of the image). In case of the corner, the flow goes to step 25A, in which luminance value of at least one (original or sampled) pixel in a corner is compared with a corresponding threshold value. If the luminance value of at least one pixel in the corner is less than the corresponding threshold value, it is determined as vignetting in the corner; otherwise it is determined as normal in the corner.

FIG. 4B shows a schematic diagram illustrating four sides of the image. Specifically, a side is defined as an area within a predetermined percentage (e.g., 10%) of either horizontal boundary or vertical boundary (but not both). In case of the side, the flow goes to step 25B, in which luminance value of at least one (original or sampled) pixel on a side is compared with a corresponding threshold value. If the luminance value of at least one pixel on the side is less than the corresponding threshold value, it is determined as blocking on the side; otherwise it is determined as normal on the side.

FIG. 4C shows a schematic diagram illustrating a center area of the image. Specifically, a center area is defined as an area of the image excluding the four corners and the four sides. In case of the center area, the flow goes to step 25C, in which luminance value of at least one (original or sampled) pixel in a center area is compared with a corresponding threshold value. If the luminance value of at least one pixel in the center area is less than the corresponding threshold value, it is determined as dirt (accumulated) in the center area; otherwise it is determined as normal in the center area.

## Claims

1. A method (200) of adaptably detecting dirt, occlusion and smudge on camera lens (11) and image sensor (12), comprising:
capturing an image;
subjecting original pixels of the image to sampling to result in sampled pixels; (21)
excluding outliers of the sampled pixels to result in retained pixels; (22)
obtaining an average value of the retained pixels; (23)
obtaining a tolerance value according to luminance values of the retained pixels, (24)
generating a threshold value for determining dirt, occlusion and smudge on camera lens and image sensor in the image according to the tolerance value and the average value of the retained pixels; (24) and
comparing a luminance value of at least one pixel of the image with a corresponding threshold value; (25A-25C)
wherein the step of subjecting original pixels of the image to sampling comprises:
sampling original pixels within a rectangle of the image to result in mxn sampled pixels, where m represents a number of sampled pixels in horizontal direction and n represents a number of sampled pixels in vertical direction;
wherein each sampled pixel corresponds to original pixels of a pixel matrix, and an average value of luminance is obtained from averaging over a pixel matrix corresponding to a sampled pixel;
wherein the tolerance value is equal to a difference between a maximum luminance value and a minimum luminance value of the retained pixels;
wherein the step of excluding outliers of the sampled pixels comprises:
sorting the sampled pixels from smallest to largest according to luminance values, thereby resulting in sorted pixels; and
removing a predetermined first percentage of the sorted pixels with smallest luminance values from the sorted pixels, and removing a predetermined second percentage of the sorted pixels with largest luminance values from the sorted pixels, thereby obtaining the retained pixels.

2. The method of claim 1, wherein the captured image comprises a monochrome image.

3. The method of claim 1, wherein the threshold value is generated by subtracting the tolerance value or multiple of the tolerance value from the average value of the retained pixels.

4. The method of claim 3, wherein a threshold value for determining dirt, occlusion and smudge on camera lens and image sensor in a center area of the image is generated by subtracting the tolerance value from the average value of the retained pixels.

5. The method of claim 4, wherein a threshold value for determining dirt, occlusion and smudge on camera lens and image sensor in an area other than the center area of the image is generated by subtracting multiple of the tolerance value from the average value of the retained pixels.

6. The method of claim 3, wherein a threshold value for a center area of the image is higher than a threshold value for an area other than the center area.

7. The method of claim 1, wherein a corner is defined as an area within a predetermined percentage of both horizontal boundary and vertical boundary of the image with rectangular shape, and vignetting is determined in the corner if the luminance value of at least one pixel in the corner is less than the corresponding threshold value.

8. The method of claim 7, wherein a side is defined as an area within a predetermined percentage of either horizontal boundary or vertical boundary of the image with rectangular shape, and blocking is determined on the side if the luminance value of at least one pixel on the side is less than the corresponding threshold value.

9. The method of claim 8, wherein a center area is defined as an area of the image excluding all corners and all sides, and dirt is determined in the center area if the luminance value of at least one pixel in the center area is less than the corresponding threshold value.

10. A system (100) of adaptably detecting dirt, occlusion and smudge on camera lens (11) and image sensor (12), comprising:
a camera module (10) that captures an image; and
a digital image processor (13) coupled to receive the image and configured to detect dirt, occlusion and smudge on camera lens and image sensor by the following steps:
subjecting original pixels of the image to sampling to result in sampled pixels; (21)
excluding outliers of the sampled pixels to result in retained pixels; (22)
obtaining an average value of the retained pixels; (23)
obtaining a tolerance value according to luminance values of the retained pixels; (24)
generating a threshold value for determining dirt, occlusion and smudge on camera lens and image sensor in the image according to the tolerance value and the average value of the retained pixels; (24) and
comparing a luminance value of at least one pixel of the image with a corresponding threshold value; (25A-25C)
wherein the step of subjecting original pixels of the image to sampling comprises:
sampling original pixels within a rectangle of the image to result in mxn sampled pixels, where m represents a number of sampled pixels in horizontal direction and n represents a number of sampled pixels in vertical direction;
wherein each sampled pixel corresponds to original pixels of a pixel matrix, and an average value of luminance is obtained from averaging over a pixel matrix corresponding to a sampled pixel;
wherein the tolerance value is equal to a difference between a maximum luminance value and a minimum luminance value of the retained pixels;
wherein the step of excluding outliers of the sampled pixels comprises:
sorting the sampled pixels from smallest to largest according to luminance values, thereby resulting in sorted pixels; and
removing a predetermined first percentage of the sorted pixels with smallest luminance values from the sorted pixels, and removing a predetermined second percentage of the sorted pixels with largest luminance values from the sorted pixels, thereby obtaining the retained pixels.

11. The system of claim 10, wherein the camera module comprises:
at least one lens (11); and
an image sensor (12) coupled to receive light focused by the at least one lens and configured to generate the image accordingly.

12. The system of claim 10, wherein the dirt, occlusion or smudge on camera lens and image sensor is detected if the luminance value of the at least one pixel of the image is less than the corresponding threshold value.

## Patentansprüche

1. Verfahren (200) zum anpassbaren Erkennen von Schmutz, Verdeckung und Verschmierung auf einem Kameraobjektiv (11) und einem Bildsensor (12), das Folgendes umfasst:
Aufnehmen eines Bildes,
Unterwerfen von ursprünglichen Bildpunkten des Bildes einem Abtasten, was zu abgetasteten Bildpunkten führt, (21)
Ausschließen von Ausreißern von den abgetasteten Bildpunkten, was zu zurückbehaltenen Bildpunkten führt, (22)
Gewinnen eines Durchschnittswertes der zurückbehaltenen Bildpunkte, (23)
Gewinnen eines Toleranzwertes entsprechend Leuchtdichtewerten der zurückbehaltenen Bildpunkte, (24)
Erzeugen eines Schwellenwertes zum Feststellen von Schmutz, Verdeckung und Verschmierung auf dem Kameraobjektiv und dem Bildsensor in dem Bild entsprechend dem Toleranzwert und dem Durchschnittswert der zurückbehaltenen Bildpunkte (24) und
Vergleichen eines Leuchtdichtewertes mindestens eines Bildpunkts des Bildes mit einem entsprechenden Schwellenwert, (25A-25C),
wobei der Schritt des Unterwerfens von ursprünglichen Bildpunkten des Bildes einem Abtasten Folgendes umfasst:
Abtasten von ursprünglichen Bildpunkten innerhalb eines Rechtecks des Bildes, was zu m x n abgetasteten Bildpunkten führt, wobei m eine Anzahl von abgetasteten Bildpunkten in horizontaler Richtung darstellt und n eine Anzahl von abgetasteten Bildpunkten in vertikaler Richtung darstellt,
wobei jeder abgetastete Bildpunkt ursprünglichen Bildpunkten einer Bildpunktmatrix entspricht und ein Durchschnittswert der Leuchtdichte aus einer Mittelwertbildung über eine Bildpunkt gewonnen wird, die einem abgetasteten Bildpunkt entspricht,
wobei der Toleranzwert gleich einer Differenz zwischen einem maximalen Leuchtdichtewert und einem minimalen Leuchtdichtewert der zurückbehaltenen Bildpunkte ist,
wobei der Schritt des Ausschließens von Ausreißern von den abgetasteten Bildpunkten Folgendes umfasst:
Sortieren der abgetasteten Bildpunkte von den kleinsten bis zu den größten entsprechend den Leuchtdichtewerten, wodurch es zu sortierten Bildpunkten führt, und
Entfernen eines vorbestimmten ersten Prozentsatzes der sortierten Bildpunkte mit kleinsten Leuchtdichtewerten von den sortierten Bildpunkten und Entfernen eines vorbestimmten zweiten Prozentsatzes der sortierten Bildpunkte mit größten Leuchtdichtewerten von den sortierten Bildpunkten, wodurch die zurückbehaltenen Bildpunkt gewonnen werden.

2. Verfahren nach Anspruch 1, wobei das aufgenommene Bild ein monochromes Bild umfasst.

3. Verfahren nach Anspruch 1, wobei der Schwellenwert durch Subtrahieren des Toleranzwertes oder eines Vielfachen des Toleranzwertes von dem Durchschnittswert der zurückbehaltenen Bildpunkte erzeugt wird.

4. Verfahren nach Anspruch 3, wobei ein Schwellenwert zum Feststellen von Schmutz, Verdeckung und Verschmierung auf dem Kameraobjektiv und dem Bildsensor in einem mittleren Bereich des Bildes durch Subtrahieren des Toleranzwertes von dem Durchschnittswert der zurückbehaltenen Bildpunkte erzeugt wird.

5. Verfahren nach Anspruch 4, wobei ein Schwellenwert zum Feststellen von Schmutz, Verdeckung und Verschmierung auf dem Kameraobjektiv und dem Bildsensor in einem anderen Bereich als dem mittleren Bereich des Bildes durch Subtrahieren eines Vielfachen des Toleranzwertes von dem Durchschnittswert der zurückbehaltenen Bildpunkte erzeugt wird.

6. Verfahren nach Anspruch 3, wobei ein Schwellenwert für einen mittleren Bereich des Bildes höher ist als ein Schwellenwert für einen anderen Bereich als den mittleren Bereich.

7. Verfahren nach Anspruch 1, wobei eine Ecke als ein Bereich innerhalb eines vorbestimmten Prozentsatze sowohl einer horizontalen Begrenzung als auch einer vertikalen Begrenzung des Bildes mit rechteckiger Form definiert wird und eine Vignettierung in der Ecke festgestellt wird, falls der Leuchtdichtewert mindestens eines Bildpunkts in der Ecke geringer ist als der entsprechende Schwellenwert.

8. Verfahren nach Anspruch 7, wobei eine Seite als ein Bereich innerhalb eines vorbestimmten Prozentsatze sowohl einer horizontalen Begrenzung als auch einer vertikalen Begrenzung des Bildes mit rechteckiger Form definiert wird und eine Blockierung auf der Seite festgestellt wird, falls der Leuchtdichtewert mindestens eines Bildpunkts auf der Seite geringer ist als der entsprechende Schwellenwert.

9. Verfahren nach Anspruch 8, wobei ein mittlerer Bereich als ein Bereich des Bildes ausschließlich aller Ecken und aller Seiten definiert wird und Schmutz in dem mittleren Bereich festgestellt wird, falls der Leuchtdichtewert mindestens eines Bildpunkts in dem mittleren Bereich geringer ist als der entsprechende Schwellenwert.

10. System (100) zum anpassbaren Erkennen von Schmutz, Verdeckung und Verschmierung auf einem Kameraobjektiv (11) und einem Bildsensor (12), das Folgendes umfasst:
ein Kameramodul (10), das ein Bild aufnimmt, und
einen digitalen Bildprozessor (13), der angeschlossen ist, um das Bild zu empfangen, und dafür konfiguriert, Schmutz, Verdeckung und Verschmierung auf dem Kameraobjektiv und dem Bildsensor durch die folgenden Schritte zu erkennen:
Unterwerfen von ursprünglichen Bildpunkten des Bildes einem Abtasten, was zu abgetasteten Bildpunkten führt, (21)
Ausschließen von Ausreißern von den abgetasteten Bildpunkten, was zu zurückbehaltenen Bildpunkten führt, (22)
Gewinnen eines Durchschnittswertes der zurückbehaltenen Bildpunkte, (23)
Gewinnen eines Toleranzwertes entsprechend Leuchtdichtewerten der zurückbehaltenen Bildpunkte, (24)
Erzeugen eines Schwellenwertes zum Feststellen von Schmutz, Verdeckung und Verschmierung auf dem Kameraobjektiv und dem Bildsensor in dem Bild entsprechend dem Toleranzwert und dem Durchschnittswert der zurückbehaltenen Bildpunkte (24) und
Vergleichen eines Leuchtdichtewertes mindestens eines Bildpunkts des Bildes mit einem entsprechenden Schwellenwert, (25A-25C),
wobei der Schritt des Unterwerfens von ursprünglichen Bildpunkten des Bildes einem Abtasten Folgendes umfasst:
Abtasten von ursprünglichen Bildpunkten innerhalb eines Rechtecks des Bildes, was zu m x n abgetasteten Bildpunkten führt, wobei m eine Anzahl von abgetasteten Bildpunkten in horizontaler Richtung darstellt und n eine Anzahl von abgetasteten Bildpunkten in vertikaler Richtung darstellt,
wobei jeder abgetastete Bildpunkt ursprünglichen Bildpunkten einer Bildpunktmatrix entspricht und ein Durchschnittswert der Leuchtdichte aus einer Mittelwertbildung über eine Bildpunkt gewonnen wird, die einem abgetasteten Bildpunkt entspricht,
wobei der Toleranzwert gleich einer Differenz zwischen einem maximalen Leuchtdichtewert und einem minimalen Leuchtdichtewert der zurückbehaltenen Bildpunkte ist,
wobei der Schritt des Ausschließens von Ausreißern von den abgetasteten Bildpunkten Folgendes umfasst:
Sortieren der abgetasteten Bildpunkte von den kleinsten bis zu den größten entsprechend den Leuchtdichtewerten, wodurch es zu sortierten Bildpunkten führt, und
Entfernen eines vorbestimmten ersten Prozentsatzes der sortierten Bildpunkte mit kleinsten Leuchtdichtewerten von den sortierten Bildpunkten und Entfernen eines vorbestimmten zweiten Prozentsatzes der sortierten Bildpunkte mit größten Leuchtdichtewerten von den sortierten Bildpunkten, wodurch die zurückbehaltenen Bildpunkt gewonnen werden.

11. System nach Anspruch 10, wobei das Kameramodul (10) Folgendes umfasst:
mindestens ein Objektiv (11) und
einen Bildsensor (12), der angeschlossen ist, um Licht aufzunehmen, das durch das mindestens eine Objektiv gebündelt wird, und dafür konfiguriert, das Bild dementsprechend zu erzeugen.

12. System nach Anspruch 10, wobei der Schmutz, die Verdeckung oder die Verschmierung auf dem Kameraobjektiv und dem Bildsensor erkannt wird, falls der Leuchtdichtewert des mindestens einen Bildpunkts geringer ist als der entsprechende Schwellenwert.

## Revendications

1. Procédé (200) de détection adaptative de saleté, d'occlusion et de traces sur un objectif de caméra (11) et un capteur d'image (12), comprenant :
la capture d'une image ;
la soumission de pixels initiaux de l'image à un échantillonnage pour donner des pixels échantillonnés ; (21)
l'exclusion de pixels aberrants des pixels échantillonnés pour donner des pixels retenus ; (22)
l'obtention d'une valeur moyenne des pixels retenus ; (23)
l'obtention d'une valeur de tolérance en fonction de valeurs de luminance des pixels retenus, (24)
la génération d'une valeur seuil pour la détermination de saleté, d'occlusion et de traces sur un objectif de caméra et un capteur d'image dans l'image en fonction de la valeur de tolérance et de la valeur moyenne des pixels retenus ; (24) et
la comparaison d'une valeur de luminance d'au moins un pixel de l'image à une valeur seuil correspondante ; (25A-25C)
dans lequel l'étape de soumission de pixels initiaux de l'image à un échantillonnage comprend :
l'échantillonnage de pixels initiaux à l'intérieur d'un rectangle de l'image pour donner m×n pixels échantillonnés, où m représente un nombre de pixels échantillonnés dans une direction horizontale et n représente un nombre de pixels échantillonnés dans une direction verticale ;
dans lequel chaque pixel échantillonné correspond à des pixels initiaux d'une matrice de pixels, et une valeur moyenne de luminance est obtenue par le calcul de la moyenne d'une matrice de pixels correspondant à un pixel échantillonné ;
dans lequel la valeur de tolérance est égale à une différence entre une valeur de luminance maximale et une valeur de luminance minimale des pixels retenus ;
dans lequel l'étape d'exclusion de pixels aberrants des pixels échantillonnés comprend :
le tri des pixels échantillonnés du plus petit au plus grand selon des valeurs de luminance, en donnant ainsi des pixels triés ; et
le retrait d'un premier pourcentage prédéterminé des pixels triés avec des valeurs de luminance les plus petites des pixels triés, et le retrait d'un deuxième pourcentage prédéterminé des pixels triés avec des valeurs de luminance les plus grandes des pixels triés, en donnant ainsi les pixels retenus.

2. Procédé selon la revendication 1, dans lequel l'image capturée comprend une image monochrome.

3. Procédé selon la revendication 1, dans lequel la valeur seuil est générée par la soustraction de la valeur de tolérance ou d'un multiple de la valeur de tolérance à la valeur moyenne des pixels retenus.

4. Procédé selon la revendication 3, dans lequel une valeur seuil de détermination de saleté, d'occlusion et de traces sur un objectif de caméra et un capteur d'image dans une zone centrale de l'image est générée par la soustraction de la valeur de tolérance à la valeur moyenne des pixels retenus.

5. Procédé selon la revendication 4, dans lequel une valeur seuil de détermination de saleté, d'occlusion et de traces sur un objectif de caméra et un capteur d'image dans une zone autre que la zone centrale de l'image est générée par la soustraction d'un multiple de la valeur de tolérance à la valeur moyenne des pixels retenus.

6. Procédé selon la revendication 3, dans lequel une valeur seuil pour une zone centrale de l'image est plus grande qu'une valeur seuil pour une zone autre que la zone centrale.

7. Procédé selon la revendication 1, dans lequel un coin est défini comme une zone à l'intérieur d'un pourcentage prédéterminé à la fois de limite horizontale et de limite verticale de l'image de forme rectangulaire, et un vignettage est déterminé dans le coin si la valeur de luminance d'au moins un pixel dans le coin est inférieure à la valeur seuil correspondante.

8. Procédé selon la revendication 7, dans lequel un côté est défini comme une zone à l'intérieur d'un pourcentage prédéterminé de limite horizontale ou de limite verticale de l'image de forme rectangulaire, et un blocage est déterminé sur le côté si la valeur de luminance d'au moins un pixel sur le côté est inférieure à la valeur seuil correspondante.

9. Procédé selon la revendication 8, dans lequel une zone centrale est définie comme une zone de l'image excluant tous les coins et tous les côtés, et de la saleté est déterminée dans la zone centrale si la valeur de luminance d'au moins un pixel dans la zone centrale est inférieure à la valeur seuil correspondante.

10. Système (100) de détection adaptative de saleté, d'occlusion et de traces sur un objectif de caméra (11) et un capteur d'image (12), comprenant :
un module de caméra (10) qui capture une image ; et
un processeur d'image numérique (13) couplé pour recevoir l'image et configuré pour la détection de saleté, d'occlusion et de traces sur un objectif de caméra et un capteur d'image par les étapes suivantes :
la soumission de pixels initiaux de l'image à un échantillonnage pour donner des pixels échantillonnés ; (21)
l'exclusion de pixels aberrants des pixels échantillonnés pour donner des pixels retenus ; (22)
l'obtention d'une valeur moyenne des pixels retenus ; (23)
l'obtention d'une valeur de tolérance en fonction de valeurs de luminance des pixels retenus ; (24)
la génération d'une valeur seuil pour la détermination de saleté, d'occlusion et de traces sur un objectif de caméra et un capteur d'image dans l'image en fonction de la valeur de tolérance et de la valeur moyenne des pixels retenus ; (24) et
la comparaison d'une valeur de luminance d'au moins un pixel de l'image à une valeur seuil correspondante ; (25A-25C)
dans lequel l'étape de soumission de pixels initiaux de l'image à un échantillonnage comprend :
l'échantillonnage de pixels initiaux à l'intérieur d'un rectangle de l'image pour donner m×n pixels échantillonnés, où m représente un nombre de pixels échantillonnés dans une direction horizontale et n représente un nombre de pixels échantillonnés dans une direction verticale ;
dans lequel chaque pixel échantillonné correspond à des pixels initiaux d'une matrice de pixels, et une valeur moyenne de luminance est obtenue par le calcul de la moyenne d'une matrice de pixels correspondant à un pixel échantillonné ;
dans lequel la valeur de tolérance est égale à une différence entre une valeur de luminance maximale et une valeur de luminance minimale des pixels retenus ;
dans lequel l'étape d'exclusion de pixels aberrants des pixels échantillonnés comprend :
le tri des pixels échantillonnés du plus petit au plus grand selon des valeurs de luminance, en donnant ainsi des pixels triés ; et
le retrait d'un premier pourcentage prédéterminé des pixels triés avec des valeurs de luminance les plus petites des pixels triés, et le retrait d'un deuxième pourcentage prédéterminé des pixels triés avec des valeurs de luminance les plus grandes des pixels triés, en donnant ainsi les pixels retenus.

11. Système selon la revendication 10, dans lequel le module de caméra comprend :
au moins un objectif (11) ; et
un capteur d'image (12) couplé pour recevoir une lumière focalisée par l'au moins un objectif et configuré pour générer l'image en conséquence.

12. Système selon la revendication 10, dans lequel la saleté, l'occlusion ou les traces sur l'objectif de caméra et le capteur d'image sont détectées si la valeur de luminance de l'au moins un pixel de l'image est inférieure à la valeur seuil correspondante.
